# FASCICULE DE BREVET EUROPEEN

(11) **EP 0 657 985 B1**
(45) Date de publication et mention de la délivrance du brevet: **05.04.2000**
(21) Numéro de dépôt: 94402813.3
(22) Date de dépôt: 07.12.1994
(51) Int. Cl.: H02M 3/158, B60L 11/12

(54) **Système pour alimenter une charge en énergie électrique à partir d'une source principale et d'une source auxiliaire**
Vorrichtung zur Speisung einer elektrischer Last durch eine Hauptquelle und eine Hilfquelle
Apparatus for driving an electrical load from a principal and an auxiliary power source

(30) Priorité: 10.12.1993 FR 9314880
(43) Date de publication de la demande: 14.06.1995
(73) Titulaire: MATRA DEFENSE EQUIPEMENTS & SYSTEMES, 75016 Paris (FR)
(72) Inventeur: Masenelli, Jean-Marc, F-75015 Paris (FR); Fontenit, Thierry, F-91550 Paray Vieille Poste (FR)
(74) Mandataire: Chameroy, Claude

(56) Documents cités:
- EP-A- 0 564 149
- EP-A- 0 584 373
- US-A- 4 672 303
- US-A- 5 233 287
- PATENT ABSTRACTS OF JAPAN vol. 17, no. 494 (E-1428) 7 Septembre 1993 & JP-A-05 122 964 (NIPPON STEEL CORP.) 18 Mai 1993
- ABB REVIEW, no.9, Septembre 1993, BADEN, CH pages 3 - 12 P. CHUDI ET AL. 'A Hybrid Drive for the Car of the Future.'
- PESC 1993 RECORD, Juin 1993, SEATTLE, USA pages 141 - 147 M.S. MAKOWSKI 'On Topological Assumptions on PWM Converters - a Reexamination.'

## Description

La présente invention concerne un système pour alimenter une charge en énergie électrique à partir d'une source principale et d'une source auxiliaire constituée par un dispositif de stockage et de récupération d'énergie du type condensateur à haute énergie massique, dans lequel la source auxiliaire est connectée directement aux bornes de la charge (M), une interface électronique de puissance, du type convertisseur statique à découpage, étant interposée entre la source principale et la source auxiliaire, cette interface étant contrôlée en permanence a partir de grandeurs électriques caractérisant l'état de système, afin d'obtenir le lissage de la puissance fournie par la source principale. Un tel système est décrit par exemple dans US-A-5 233 287.

Il existe à l'heure actuelle dans le milieu industriel, de nombreux équipements qui consomment ou renvoient vers le réseau des puissances électriques importantes pendant des durées relativement courtes. Leur comportement est très souvent contraignant pour le réseau d'alimentation principal.

En effet, ces puissances crêtes sont fournies par le réseau d'alimentation du système pendant parfois plusieurs dizaines de secondes. Pour ces sources d'alimentation, ces régimes sont souvent assimilables à des régimes permanents et conduisent à leur surdimensionnement. Ceci est particulièrement pénalisant sur des systèmes embarqués où ces sources (alternateurs, batteries...) doivent être de volume, de masse et de coût raisonnables.

Ces systèmes peuvent également renvoyer des puissances crêtes importantes vers le réseau. C'est par exemple, le cas d'un moteur électrique au freinage. Afin d'améliorer le rendement de l'installation, il est intéressant de récupérer cette énergie. Ceci n'est malheureusement pas toujours possible,soit parce que le réseau n'est pas réversible (alternateur-redresseur par exemple), soit parce que la source d'alimentation n'est pas capable de récupérer ces puissances avec un bon rendement (batteries par exemple).

Paradoxalement, ces systèmes ne consomment souvent qu'une puissance moyenne relativement faible. Il est donc intéressant d'intégrer à de telles installations une source de puissance auxiliaire, capable de stocker une quantité suffisante d'énergie dans un encombrement raisonnable, afin de fournir l'énergie à la charge lors des régimes impulsionnels. A condition d'être réversible, cette source auxiliaire peut également récupérer l'énergie susceptible d'être renvoyée par la charge vers le réseau. La source principale d'alimentation ne délivre alors qu'une puissance moyenne.

On a déjà pensé à utiliser des condensateurs pour constituer une telle source auxiliaire. En effet, les condensateurs sont bien adaptés à un fonctionnement en régime impulsionnel en raison de leur faible résistance série. De plus, grâce aux technologies récentes, on dispose maintenant de condensateurs à haute énergie massique, supérieure à 0,5 Wh/kg et qui devraient bientôt atteindre des valeurs de plus de 10 Wh/kg, connus également sous le nom de "supercapacités" ou "ultracapacités". De tels condensateurs sont décrits par exemple dans EP-A-0 584 373. Quant à la source principale, elle est le plus souvent constituée par une batterie d'accumulateurs ou un ensemble alternateur/redresseur, notamment lorsqu'il s'agit de systèmes embarqués.

Le domaine de prédilection de ces systèmes est naturellement le domaine de l'automobile, en particulier pour l'entraînement des véhicules électriques, mais ils peuvent également être avantageusement utilisés dans d'autres domaines comme le domaine ferroviaire, le domaine aéronautique ou le domaine militaire.

Dans le domaine de l'automobile par exemple, on a déjà proposé pour un véhicule électrique, un système dans lequel la source principale, constituée par une batterie d'accumulateur, est connectée directement aux bornes de la charge, constituée par un moteur électrique, tandis que la source auxiliaire, constituée par un condensateur à haute énergie massique du type ultracapacité, est branchée en parallèle sur la charge par l'intermédiaire d'une interface de puissance réversible en courant.

Une telle architecture convient parfaitement en terme de stockage d'énergie, mais elle présente néanmoins deux inconvénients.

Tout d'abord, la gestion des échanges d'énergie entre la batterie, l'ultracapacité et la charge n'est pas assurée, dans la mesure où la répartition des flux d'énergie dépend essentiellement des impédances respectives de la batterie et de l'ensemble interface/ultracapacité. Il n'existe donc aucun organe de contrôle véritable, permettant de maîtriser et de gérer ces échanges. Ce système ne permet donc pas de minimiser véritablement les sollicitations au niveau de la batterie.

Par ailleurs, l'interface de puissance est parcourue par des intensités extrêmement élevées lorsque l'ultracapacité est fortement déchargée. Ceci se traduit, soit par un surdimensionnement de cette interface, soit par l'impossibilité d'utiliser toute la profondeur de décharge de l'ultracapacité, ce qui constitue pourtant l'argument essentiel pour justifier cette structure.

La présente invention a donc pour but principal de remédier à ces inconvénients et, pour ce faire, elle a pour objet un système d'alimentation du type susmentionné qui se caractérise essentiellement en ce que l'interface électronique de puissance est commandée, en fonction de la valeur du courant à sa sortie et de la valeur de la tension aux bornes de la source auxiliaire, selon une loi spécifique comportant au moins quatre phases, à savoir :
1/ une première phase au cours de laquelle la tension aux bornes de la source auxiliaire est constante et égale à une première valeur prédéterminée, tandis que le courant de sortie de l'interface varie entre 0 et une première valeur prédéterminée ;
2/ une deuxième phase au cours de laquelle la tension aux bornes de la source auxiliaire varie entre ladite première valeur prédéterminée et une seconde valeur prédéterminée inférieure à la première, tandis que le courant de sortie de l'interface varie entre ladite première valeur prédéterminée et une seconde valeur prédéterminée supérieure à la première ;
3/ une troisième phase au cours de laquelle la tension aux bornes de la source auxiliaire est constante et égale à ladite seconde valeur prédéterminée, tandis que le courant de sortie de l'interface varie entre ladite seconde valeur prédéterminée et une valeur maximum ; et
4/ une quatrième phase au cours de laquelle le courant de sortie de l'interface est limité à sa valeur maximum tandis que la tension aux bornes de la source auxiliaire devient inférieure à ladite seconde valeur prédéterminée.

De plus, au cours de la deuxième phase, la tension aux bornes de la source auxiliaire varie en fonction du courant de sortie de l'interface selon une loi prédéterminée.

Dans une forme de réalisation particulière de l'invention, cette loi prédéterminée est une loi de variation linéaire, mais elle pourrait également avoir d'autres formes, par exemple parabolique ou hyperbolique, selon la nature de la charge et son utilisation.

Selon une autre particularité de l'invention, et dans le cas où la source principale est réversible en courant, par exemple une batterie d'accumulateurs, il est prévu une cinquième phase au cours de laquelle la tension aux bornes de la source auxiliaire ayant atteint une valeur maximum, l'interface est rendue réversible en courant afin de permettre le renvoi d'énergie vers la source principale.

Une forme d'exécution de l'invention est décrite ci-après à titre d'exemple, en référence aux dessins annexés dans lesquels :
- la figure 1 est un schéma synoptique d'un système d'alimentation conforme à l'invention ;
- la figure 2 est un schéma plus détaillé montrant la structure de l'interface électronique de puissance ; et
- les figures 3 et 4 sont des graphiques illustrant les lois de commande de l'interface électronique de puissance.

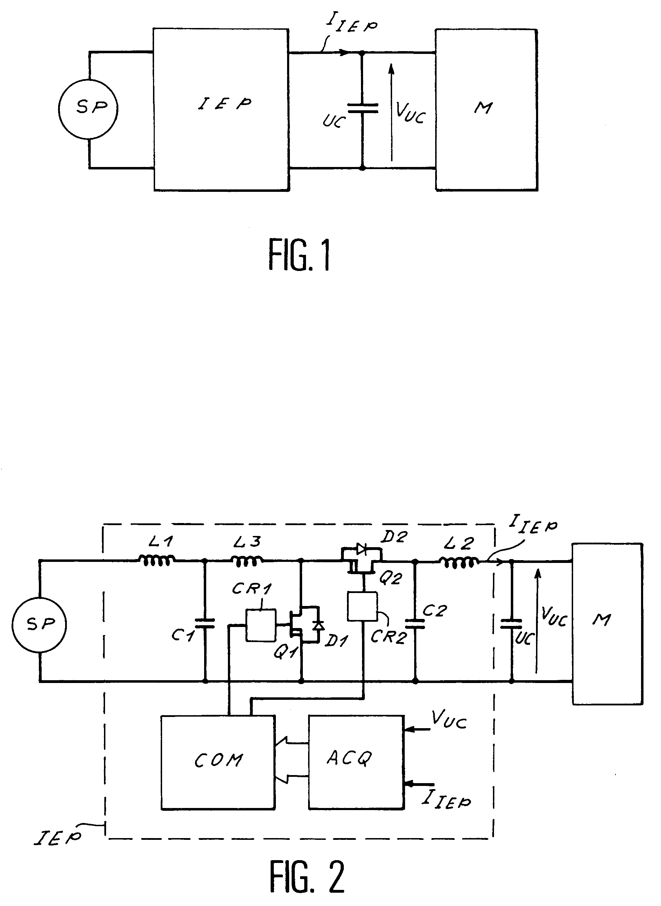

Le système représenté schématiquement sur la figure 1 est destiné à alimenter en énergie électrique une charge M constituée par exemple par un moteur électrique, à partir d'une source principale SP constituée généralement par une batterie d'accumulateurs, et d'une source auxiliaire UC du type condensateur à haute énergie massique, c'est-à-dire un condensateur ou plus précisément une batterie de condensateurs du genre ultracapacité ayant une énergie massique supérieure à 0,5 Wh/kg.

Conformément à l'invention, la source auxiliaire UC est connectée directement aux bornes de la charge M, tandis qu'une interface électronique de puissance IEP du type convertisseur statique à découpage, bidirectionnelle en courant et unidirectionnelle en tension, est interposée entre la source principale SP et la source auxiliaire UC.

On voit immédiatement que comme l'ultracapacité UC est placée aux bornes de la charge, il est impossible de la décharger totalement dans la mesure où il faut assurer une tension minimale de fonctionnement aux bornes de la charge. La "profondeur" de décharge de l'ultracapacité dépend uniquement du type de charge. En moyenne, on peut cependant considérer qu'une profondeur de décharge de l'ordre de 25 % par rapport à la tension nominale de fonctionnement de l'ultracapacité constitue un bon ordre de grandeur pour la majorité des applications. Ceci permet d'utiliser environ 45 % de l'énergie stockée dans l'ultracapacité.

Par ailleurs, comme l'interface IEP est intercalée entre la source principale d'alimentation SP et la source auxiliaire constituée par l'ultracapacité UC, on assure un excellent découplage entre les deux sources, ce qui permet de contrôler et de gérer correctement les échanges d'énergie entre ces deux sources, grâce à des lois de commande optimisées spécifiques de l'interface qui seront décrites plus en détail par la suite. On notera enfin que cette interface n'a pas besoin d'être surdimensionnée dans la mesure où les courants qui la traversent sont, par principe, limités.

Le convertisseur statique a découpage constituant l'interface électronique de puissance IEP et qui va permettre de réguler et de doser les échanges d'énergie entre les deux sources peut être indifféremment du type élévateur de tension, abaisseur de tension, ou encore abaisseur-élévateur de tension. En effet, le montage en série de l'interface IEP n'impose pas à la charge M de fonctionner obligatoirement sous la tension d'alimentation de la source principale SP. Ceci peut se révéler particulièrement intéressant, par exemple dans des systèmes où le réseau d'alimentation est en basse tension (24 V par exemple), et où les puissances impulsionnelles consommées par la charge sont importantes. Dans ce cas, il est intéressant de faire fonctionner cette charge sous tension plus élevée afin d'améliorer son rendement, ce qui conduit alors à mettre en oeuvre un convertisseur élévateur au niveau de l'interface IEP.

On a représenté à titre d'exemple sur la figure 2, une interface électronique de puissance IEP du type élévateur de tension. On notera toutefois que du fait de sa réversibilité en courant, l'interface est du type élévateur de tension dans le cas d'un échange d'énergie de la source principale SP vers l'ultracapacité UC, et du type abaisseur de tension dans le cas contraire.

Cette interface comprend essentiellement une inductance série L3, un transistor parallèle Q1 et un transistor série Q2. Ces deux transistors peuvent être de type quelconque et sont pourvus chacun d'une diode en antiparallèle, respectivement D1 et D2. La structure "élévateur de tension" est ainsi réalisée par l'intermédiaire des éléments L3, Q1 et D2, tandis que la structure "abaisseur de tension" est obtenue grâce aux éléments L3, Q2 et D1. Le contrôle des échanges d'énergie s'effectue en pilotant l'angle de conduction des transistors Q1 et Q2 par l'intermédiaire d'unités de commande rapprochée, respectivement CR1 et CR2, elles-mêmes sous la dépendance d'une unité principale de contrôle et de commande COM.

Par ailleurs, des cellules de filtrage L1C1 et L2C2 sont prévues respectivement à l'entrée et à la sortie du convertisseur pour absorber les courants efficaces haute fréquence dus au découpage, de manière à réduire les ondulations dans la source principale SP et dans l'ultracapacité UC.

L'interface électronique de puissance IEP doit se comporter comme un filtre actif de puissance vis-à-vis de la source principale SP. La composante alternative de la puissance demandée sera donc fournie par l'ultracapacité UC, la source principale SP ne fournissant que la puissance moyenne nécessaire pour alimenter la charge M et recharger l'ultracapacité UC. En effet, l'intérêt de l'ultracapacité réside dans la possibilité de fournir des impulsions de puissance de très grandes amplitudes et de se recharger, le cas échéant, lors des phases de récupération d'énergie. La valeur moyenne de la puissance fournie à la charge étant strictement positive, il est indispensable de pouvoir donner le complément de charge à l'ultracapacité afin d'obtenir à ses bornes des tensions initiales et finales identiques sur un cycle donné. Cette fonction est dévolue à la source principale au travers de l'interface électronique, ces deux sous-ensembles se comportant en fait comme un chargeur de UC fournissant la puissance moyenne nécessaire à la charge M.

Les lois de commande de l'interface IEP sont donc conçues de façon à obtenir le lissage le plus parfait possible de la puissance fournie par la source principale d'alimentation SP.

A cet effet, une unité d'acquisition ACQ permet de mesurer différentes grandeurs électriques caractérisant l'état du système. Ces grandeurs sont ensuite traitées en temps réel et permettent à l'unité principale COM de générer les lois de commande nécessaires au fonctionnement souhaité des transistors Q1 et Q2 du convertisseur.

L'objectif majeur étant de contrôler le plus finement possible la puissance fournie par la source principale, on réalise une boucle de régulation sur le courant qu'elle délivre, c'est-à-dire essentiellement le courant de sortie I_{IEP} de l'interface IEP qui est directement proportionnel au courant délivré par la source principale. La référence de cette boucle de courant est obtenue à partir de la tension V_{UC} aux bornes de l'ultracapacité UC. Ces deux seules grandeurs électriques que sont le courant de sortie I_{IEP} de l'interface et la tension V_{UC} aux bornes de l'ultracapacité permettent de contrôler entièrement le fonctionnement de ladite interface.

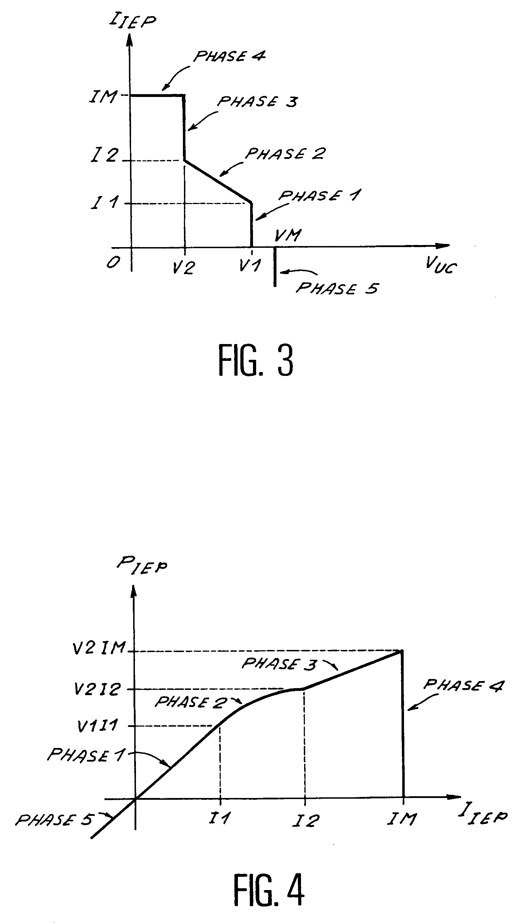

Conformément à la présente invention, on donne à cette interface la caractéristique de sortie représentée sur le graphique de la figure 3, dans laquelle le courant I_{IEP} qu'elle délivre est exprimé en fonction de la tension V_{UC} aux bornes de l'ultracapacité. A partir de cette caractéristique, on peut en déduire la caractéristique de la puissance P_{IEP} fournie par l'interface IEP en fonction de son courant de sortie I_{IEP}, comme représenté sur le graphique de la figure 4.

On distingue ainsi très clairement sur ces deux graphiques, cinq phases de fonctionnement distinctes.

### Phase 1

Dans cette phase le dispositif se comporte comme une véritable source de tension de valeur V1 jusqu'à ce que le courant atteigne la valeur I1. Ceci correspond à un fonctionnement pendant lequel la puissance consommée par la charge M reste inférieure à un seuil prédéterminé. La charge ne consommant, dans ce cas, aucune puissance crête, l'interface IEP permet à la source principale de fournir cette puissance.

### Phase 2

Lorsque la tension V_{UC} décroît de V1 à V2, le courant fourni par le dispositif croît progressivement de I1 à I2, selon une loi prédéterminée qui, dans l'exemple représenté ici, est linéaire. L'intérêt de cette phase est de permettre une adaptation progressive du courant fourni par la source principale à l'état de décharge de l'ultracapacité détecté par la chute de tension à ses bornes. La loi de variation du courant en fonction de la tension V_{UC} peut être linéaire, parabolique, hyperbolique, ou autre. Pendant cette phase, la charge consomme une puissance considérée comme une puissance impulsionnelle par l'interface IEP. Grâce à la loi de variation mise en oeuvre, la puissance fournie par la source principale varie peu lors de ces appels de puissance. On obtient ainsi cet effet de lissage recherché, au niveau de la source principale.

### Phase 3

Durant cette phase, le dispositif se comporte comme une source de tension de valeur V2. Cette valeur V2 correspond à la tension minimale de fonctionnement de la charge. Le fonctionnement dans cette zone doit rester exceptionnel, car il correspond à une phase où toute la puissance est fournie par la source principale, cette puissance pouvant atteindre une valeur maximum V2IM. Une telle phase correspond à un appel de puissance très long et peu fréquent, par exemple le franchissement d'une côte dans le cas d'un véhicule électrique.

### Phase 4

Cette zone n'est atteinte qu'accidentellement et correspond en fait à une limitation du courant à sa valeur maximum IM par l'interface électronique pour éviter sa destruction.

### Phase 5

Lorsque la tension V_{UC} aux bornes de l'ultracapacité atteint une valeur maximale VM et que la charge renvoie de l'énergie vers le réseau, on autorise un fonctionnement réversible de l'interface permettant de réinjecter dans la source principale SP cette énergie. On évitera là aussi de fonctionner trop souvent dans cette zone, car le rendement de recharge de la source principale est très souvent inférieur à celui de l'ultracapacité. Cette phase correspond à un renvoi prolongé d'énergie vers le réseau, par exemple lors de la descente d'une côte pour un véhicule électrique.

L'analyse de ces cinq phases montre que le fonctionnement le plus intéressant pour la source principale est celui correspondant aux phases 1 et 2. C'est là en effet que l'on utilise au mieux l'ultracapacité UC dont la tension évolue entre V1 et V2 pendant que la puissance fournie par l'interface électronique ne dépasse jamais V2I2.

Pour une charge et une valeur de UC données, il est donc indispensable de déterminer la loi de commande optimale permettant de fonctionner dans les zones 1 et 2. Cette loi sera entièrement déterminée par les valeurs de V1, V2, VM, I1, I2, IM, et la loi de variation du courant durant la phase 2.

La loi de variation du courant durant la phase 2 est choisie en fonction du comportement de la charge. Elle dépend essentiellement des caractéristiques des appels de puissance. Elle est conçue de telle sorte que, statistiquement, I'ultracapacité UC fournisse la majorité des appels de puissance. Pour les appels de puissance plus importants (en amplitude ou en durée), la loi de variation est conçue de manière à ce qu'ils soient fournis en partie par l'ultracapacité, et en partie par la source principale. Cette méthode permet d'optimiser le dimensionnement de l'ultracapacité,tout en assurant un bon lissage de la puissance fournie par la source principale.

On voit donc en définitive que la présente invention permet d'assurer en toutes circonstances une excellente gestion des échanges d'énergie entre la source principale et la source auxiliaire constituée par l'ultracapacité.

## Revendications

1. Système pour alimenter une charge (M) en énergie électrique à partir d'une source principale (SP) et d'une source auxiliaire (UC) constituée par un dispositif de stockage et de récupération d'énergie du type condensateur, dans lequel la source auxiliaire (UC) est connectée directement aux bornes de la charge (M), une interface électronique de puissance (IEP), du type convertisseur statique à découpage, étant interposée entre la source principale (SP) et la source auxiliaire (UC), cette interface étant contrôlée en permanence à partir de grandeurs électriques caractérisant l'état de système, afin d'obtenir le lissage de la puissance fournie par la source principale (SP), caractérisé en ce que l'interface électronique de puissance (IEP) est commandée, en fonction de la valeur du courant à sa sortie (I_{IEP}) et de la valeur (V_{UC}) de la tension aux bornes de la source auxiliaire (UC), selon une loi spécifique comportant au moins quatre phases, à savoir :
1/ une première phase au cours de laquelle la tension (V_{UC}) aux bornes de la source auxiliaire (UC) est constante et égale à une première valeur prédéterminée (V1), tandis que le courant de sortie (I_{IEP}) de l'interface (IEP) varie entre 0 et une première valeur prédéterminée (I1);
2/ une deuxième phase au cours de laquelle la tension (V_{UC}) aux bornes de la source auxiliaire (UC) varie entre ladite première valeur prédéterminée (V1) et une seconde valeur prédéterminée (V2) inférieure à la première, tandis que le courant de sortie (I_{IEP}) de l'interface (IEP) varie entre ladite première valeur prédéterminée (I1) et une seconde valeur prédéterminée (I2) supérieure à la première ;
3/ une troisième phase au cours de laquelle la tension (V_{UC}) aux bornes de la source auxiliaire (UC) est constante et égale à ladite seconde valeur prédéterminée (V2), tandis que le courant de sortie (I_{IEP}) de l'interface (IEP) varie entre ladite seconde valeur prédéterminée (I2) et une valeur maximum (IM); et
4/ une quatrième phase au cours de laquelle le courant de sortie (I_{IEP}) de l'interface (IEP) est limité à sa valeur maximum (IM) tandis que la tension (V_{UC}) aux bornes de la source auxiliaire (UC) devient inférieure à ladite seconde valeur prédéterminée (V2).

2. Système selon la revendication 1, caractérisé en ce qu'au cours de la deuxième phase, la tension (V_{UC}) aux bornes de la source auxiliaire (UC) varie en fonction du courant de sortie (I_{IEP}) de l'interface (IEP) selon une loi prédéterminée.

3. Système selon la revendication 2, caractérisé en ce que ladite loi prédéterminée est une loi de variation linéaire.

4. Système selon l'une quelconque des revendications 1 à 3, dans lequel la source principale (SP) est réversible en courant, caractérisé en ce qu'il est prévu une cinquième phase au cours de laquelle la tension (V_{UC}) aux bornes de la source auxiliaire (UC) ayant atteint une valeur maximum (VM), l'interface (IEP) est rendue réversible en courant afin de permettre le renvoi d'énergie vers la source principale.

## Claims

1. A system for supplying a load (M) with electric energy from a principal source (SP) and an auxiliary source (UC) formed by a capacitor-type energy storage and recovery device, wherein the auxiliary source (UC) is connected directly across the load (M), a power electronic interface (IEP) of the chopping static converter type being interposed between the principal source (SP) and the auxiliary source (UC), said interface being permanently controlled from electric quantities characterizing the system status, so as to obtain the smoothing of the power supplied by the principal source (SP), characterized in that the power electronic interface (IEP) is controlled according to the value of the current at its output (I_{IEP}) and to the value (V_{UC}) of the voltage across the auxiliary source (UC), in accordance with a specific law comprising at least four phases, i.e.:
1/ a first phase, during which the voltage (V_{UC}) across the auxiliary source (UC) is constant and equal to a first predetermined value (V1), while the output current (I_{IEP}) of the interface (IEP) varies between 0 and a first predetermined value (I1);
2/ a second phase, during which the voltage (V_{UC}) across the auxiliary source (UC) varies between said first predetermined value (V1) and a second predetermined value (V2), which is lower than said first predetermined value, while the output current (I_{IEP}) of the interface (IEP) varies between said first predetermined value (I1) and a second predetermined value (I2), which is higher than said first predetermined value;
3/ a third phase, during which the voltage (V_{UC}) across the auxiliary source (UC) is constant and equal to said second predetermined value (V2), while the output current (I_{IEP}) of the interface (IEP) varies between said second predetermined value (I2) and a maximum value (IM); and
4/ a fourth phase, during which the output current (I_{IEP}) of the interface (IEP) is limited to its maximum value (IM), while the voltage (V_{UC}) across the auxiliary source (UC) becomes lower than said second predetermined value (V2).

2. The system according to claim 1, characterized in that during the second phase the voltage (V_{UC}) across the auxiliary source (UC) varies according to the output current (I_{IEP}) of the interface (IEP) in accordance with a predetermined law.

3. The system according to claim 2, characterized in that said predetermined law is a linear variation law.

4. The system according to any of claims 1 to 3, wherein the principal source (SP) is current reversible, characterized in that there is provided a fifth phase, during which the voltage (V_{UC}) across the auxiliary source (UC) having reached a maximum value (VM), the interface (IEP) is made current reversible so that energy can be returned to the principal source.

## Patentansprüche

1. Vorrichtung zur Speisung einer elektrischen Last (M) durch eine Hauptquelle (SP) und eine Hilfsquelle (UC), gebildet durch eine Energiespeicher- und -rückgewinnungsvorrichtung des Typs Kondensator, bei der die Hilfsquelle (UC) direkt mit den Anschlüssen der Last (M) verbunden ist, ein elektronisches Leistungsinterface (IEP) des Typs statischer Schneidumsetzer, eingeschaltet zwischen die Hauptquelle (SP) und die Hilfsquelle (UC), wobei dieses Interface permanent kontrolliert wird aufgrund elekrischer Größen, die den Zustand des Systems charakterisieren, um eine Glättung der durch die Hauptquelle (SP) gelieferten Energie zu erhalten,
**dadurch gekennzeichnet,**
daß das elektronische Leistungsinterface (IEP) in Abhängigkeit von dem Wert (I_{IEP}) des Strom an seinem Ausgang und dem Wert (V_{UC}) der Spannung an den Anschlüssen der Hilfsquelle (UC) nach einem spezifischen Gesetz gesteuert wird, das wenigstens vier Phasen umfaßt, nämlich:
1/ eine erste Phase, in deren Verlauf die Spannung (V_{UC}) an den Anschlüssen der Hilfsquelle (UC) konstant und gleich einem ersten festgelegten Wert (V1) ist, während der Ausgangsstrom (I_{IEP}) des Interfaces (IEP) zwischen 0 und einem ersten festgelegten Wert (I1) variiert;
2/ eine zweite Phase, in deren Verlauf die Spannung (V_{UC}) an den Anschlüssen der Hilfsquelle (UC) zwischen dem ersten festgelegten Wert (V1) und einem zweiten festgelegten Wert (V2) variiert, der kleiner ist als der erste, während der Ausgangsstrom (I_{IEP}) des Interfaces (IEP) zwischen dem ersten festgelegten Wert (I1) und einem zweiten festgelegten Wert (I2) variiert, der größer ist als der erste;
3/ eine dritte Phase, in deren Verlauf die Spannung (V_{UC}) an den Anschlüssen der Hilfsquelle (UC) konstant und gleich dem genannten zweiten festgelegten Wert (V2) ist, während der Ausgangsstrom (I_{IEP}) des Interfaces (IEP) zwischen dem genannten zweiten festgelegten Wert (I2) und einem Höchstwert (IM) variiert; und
4/ eine vierte Phase, in deren Verlauf der Ausgangsstrom (I_{IEP}) des Interfaces (IEP) auf seinen Höchstwert (IM) begrenzt ist, während die Spannung (V_{UV}) an den Anschlüssen der Hilfsquelle (UC) kleiner wird als der genannte zweite festgelegte Wert (V2).

2. Vorrichtung nach Anspruch 1, dadurch gekennzeichnet, daß im Verlauf der zweiten Phase die Spannung (V_{UC}) an den Anschlüssen der Hilfsquelle (UC) in Abhängigkeit von dem Ausgangsstrom (I_{IEP}) des Interfaces (IEP) nach einem festgelegten Gesetz variiert.

3. Vorrichtung nach Anspruch 2, dadurch gekennzeichnet, daß das genannte festgelegte Gesetz ein Linearveränderungsgesetz ist.

4. Vorrichtung nach einem der Ansprüche 1 bis 3, bei der die Hauptquelle (SP) stromumschaltbar bzw. -umkehrbar ist, dadurch gekennzeichnet, daß eine fünfte Phase vorgesehen ist, in deren Verlauf, wenn die Spannung (V_{UC}) an den Anschlüssen der Hilfsquellen (UC) einen Höchstwert (VM) erreicht hat, im Interface (IEP) eine Stromumkehrung bzw. -umsteuerung stattfindet, um eine Rückspeisung von Energie in die Hauptquelle zu ermöglichen.
